Europäisches Patentamt

European Patent Office

Office européen des brevets

(11) Publication number: **0 511 484 A2**

# EUROPEAN PATENT APPLICATION

(21) Application number: **92104507.6**

(22) Date of filing: **16.03.92**

(51) Int. Cl.5: **G06F 9/38**

(30) Priority: **20.03.91 JP 81810/91**

(43) Date of publication of application:
**04.11.92 Bulletin 92/45**

(84) Designated Contracting States:
**DE FR GB IT**

(71) Applicant: **HITACHI, LTD.**
**6, Kanda Surugadai 4-chome**
**Chiyoda-ku, Tokyo 101(JP)**

(72) Inventor: **Okado, Kazuo**
**Hitachi-Seiwaryo, 769, Shin-machi**
**Ohme-shi, Tokyo(JP)**
Inventor: **Sugino, Kimihiro**
**303, Dominansu Kabe, 3-1120-3, Kabe-cho**
**Ohme-shi, Tokyo(JP)**

(74) Representative: **Strehl, Schübel-Hopf,**
**Groening**
**Maximilianstrasse 54 Postfach 22 14 55**
**W-8000 München 22(DE)**

(54) **Loop control in a data processor.**

(57) Disclosed is a data processor comprising a micro ROM 201, an instruction decoder 1DEC, a repeat controller 207 and a first and a second instruction register IR1, IR2. The instruction decoder 1DEC decodes a repeat instruction read from the micro ROM 201 and thereby furnishes the repeat controller 207 with an internal state requiring specific instructions following the repeat instruction to be executed repeatedly. In turn, the repeat controller 207 reads the instructions to be repeated in series from the micro ROM 201 and places them into the first and second instruction registers IR1, IR2 for execution. Then with access to the micro ROM 201 inhibited, the instructions in the first and second instruction registers IR1, IR2 are supplied repeatedly to the instruction decoder 1DEC for recurrent execution until a repeat counter RC within the repeat controller 207 returns to zero.

FIG. 1

BACKGROUND OF THE INVENTION:

The present invention relates to a data processor in a one-chip format comprising a control memory and, more particularly, to technology for reducing power dissipation of the data processor (for example, a digital signal processor) in repeatedly executing specific instructions held in that control memory.

The digital signal processor is utilized in such applications as filtering, equalization and echo canceling. Illustratively, a digital signal processor is used to implement adaptive filters such as a transversal filter that varies the characteristics of the transversal filter in an adaptive manner depending on the temporal changes of an input signal. In such a case, given one sampling signal, the data signal processor repeatedly executes for each tap the calculation for filter output and the calculation for updating the coefficient of the tap. Where the processing involves repeatedly executing one or a plurality of instructions, the number of lines constituting the processing program may be reduced using what is known as a repeat instruction. The repeat instruction has code information that causes the instructions following it to be executed a plurality of times. The execution repeat count is controlled by a repeat counter having a predetermined count set thereto. During the repetitive instruction execution, the count on a program counter is held constant so that the same instruction will be read from control memory as many times as specified.

Digital signal processors are illustratively discussed in IEEE Journal of Solid-State Circuits, Vol. SC21, No. 1, February 1986, pp. 86-91.

SUMMARY OF THE INVENTION:

The inventors found that when one or a plurality of instructions are to be executed repeatedly, it is a power-wasting practice to access the control memory for separately acquiring each and every one of the multiple instructions for execution. Thus the inventors considered ways to reduce the power dissipation particularly of an echo canceling LSI for use with an ISDN (Integrated Services Digital Network). Below are some of the inventors' findings. The echo canceling LSI cancels that echo component of signals which migrates from the transmitting side to the receiving side, the echo component being generated principally by impedance mismatching between a balancing network circuit and a transmission line. The echo canceling LSI must constitute an adaptive filter with a relatively large number of taps in order to deal with the uncertain factor of impedance mismatching between the network circuit and a given communication line connected thereto. Furthermore, the echo canceling LSI is required to offer high processing performance per unit time, with correspondingly increased power dissipation. Given these requirements, the echo canceling LSI cannot afford to access repeatedly the control memory to retrieve the same instruction over and over in each operation cycle involving a relatively high instruction repeat count. That is, while the same instruction can be used repeatedly, large amounts of power need to be dissipated to activate the word lines and peripheral circuits upon repeated access to the control memory for recurrent retrieval of the same instruction. This could make it impossible for the LSI arrangement to carry out its tasks if the available power is limited under constraints on the power supply from an exchange or from batteries.

It is therefore an object of the present invention to provide a data processor that reduces power dissipation in the control memory thereof when any particular instruction is repeatedly executed.

Further objects, features and advantages of the invention will become more apparent upon a reading of the following description and appended drawings.

A typical embodiment of the invention is summarized as follows. According to one aspect of the invention, there is provided a data processor in a single chip format for reading instructions in a specific order from a built-in control memory. When an internal state develops which requires repeatedly executing a specific instruction contained in the control memory, that instruction is held in a register and further access to the control memory is inhibited. Then suitable control means is provided to retrieve that instruction repeatedly from the register for execution.

If a plurality of instructions need to be repeatedly executed each, as many registers as the number of these multiple instructions are provided. In this case, with the instructions retained individually in their respective registers, the control means uses suitable logic circuits to select repeatedly these instructions in proper order.

If a repeat instruction is utilized to generate an internal state that requires repeatedly executing particular instructions, instruction decoding means is provided to decode the repeat instruction. The decoding yields the number of times each instruction is to be executed and the number of the instructions to be executed repeatedly in series. These settings are set to the control means when the latter is initialized. The control means comprises logic circuits whereby the instructions to be repeatedly executed in series are read from the control memory and placed into the registers; whereby the access to the control memory is inhibited; and whereby the instructions held in these registers are output to the instruction decoding means as many times as required.

If an operand address is to be changed in a specific instruction upon repeated execution thereof, address generating means is provided to update the operand address so as to accommodate the repeated execution of the instruction. In addition, the instruction decoding means includes logic circuits for decoding the repeat instruction and for setting an initial value according to a result of the decoding into the address generating means.

The data processor of the above construction reduces power dissipation in accessing the control memory when particular instructions are repeatedly executed, as will be described later in more detail. This invention is suitably applied to a digital signal processor constituting an adaptive filter that requires a relatively large number of taps.

Alternatively, the data processor of the above construction may be arranged to store those instructions to be executed repeatedly in series in a separate control memory apart from the other instructions. In this case, suitable means is provided to switch as needed to the control memory wherein reside the target instructions, the switching being carried out upon occurrence of an internal state requiring these specific instructions to be repeatedly executed.

With the above-described means in place, the data processor when required reads from the control memory those particular instructions to be executed repeatedly and puts them into registers. From then on, it is not the control memory but these registers that are accessed for instruction execution. This setup reduces power dissipation in activating the word lines and peripheral circuits associated with the control memory.

In the alternative arrangement in which the instructions to be repeatedly executed (relatively few in number) in series are separated from the remaining instructions and placed in a separate control memory, a correspondingly small number of peripheral circuits need to be activated to access that control memory for repeated instruction execution. This also contributes to reducing the power dissipation involved.

BRIEF DESCRIPTION OF THE DRAWINGS:

Fig. 1 is a block diagram of a digital signal processing unit comprising a control block and embodying the invention;
Fig. 2 is a block diagram of an alternative control block used in the digital signal processing unit and different from that shown in Fig. 1;
Fig. 3 is a block diagram of a further alternative control block used in the digital signal processing unit and different from that shown in Fig. 1;
Fig. 4 is a schematic view of a micro ROM contained in the digital signal processing unit;
Fig. 5 is a function block diagram of an echo canceling LSI of Fig. 6 as it acts as an echo canceler which also embodies the invention;
Fig. 6 is a block diagram of the echo canceling LSI in its chip image;
Fig. 7 is a view describing a typical algorithm of a transversal type adaptive filter to which the invention is applied; and
Fig. 8 is a schematic view of a typical integrated services digital network.

DESCRIPTION OF THE PREFERRED EMBODIMENTS:

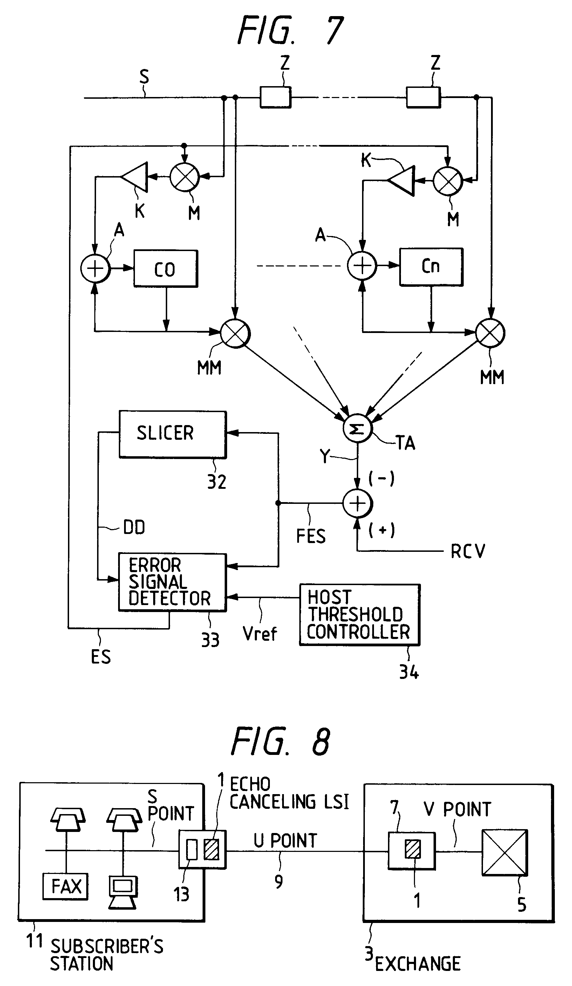

Fig. 8 shows a simplified integrated services digital network (ISDN). In Fig. 8, reference numeral 1 is an echo canceling type waveform equalizing LSI (simply called the echo canceling LSI) for use with the ISDN. The echo canceling LSI 1 provides full-duplex digital data transmission over telephone lines at a basic rate of the so-called 2B + D (2 channels of 64 Kbps each and 1 channel of 16 Kbps). By performing digital signal processing under state transition control, the echo canceling LSI 1 outputs transmitted data, identifies received data, and cancels the transmitted data that may echo back to the receiving side (i.e., echo cancellation). The echo canceling LSI 1 utilizes, but is not limited to, an 80 kHz frequency cycle as its unit interval for processing one data item. At each interval, the echo canceling LSI 1 detects the transition state, sets a new state, and carries out digital signal processing.

Referring further to Fig. 8, reference numeral 3 is an exchange; 5 is a switching system; 7 is an office channel unit for connecting the switching system 5 with a line 9; 11 is a subscriber's station; and 13 is a digital service unit for connecting the subscriber's station with the line 9. The echo canceling LSI 1 is attached both to the subscriber's station 11 and to the exchange 3. When the entire transmission equipment containing the subscriber's echo canceling LSI 1 (e.g., the digital service unit 13) needs to be powered by the exchange 3, the power is supplied as direct currents over the line 9 in a multiplexed manner. This means that there is a limit to the distribution of power available for consumption by the echo canceling LSI 1. Furthermore, the echo canceler in the LSI must be implemented using an adaptive filter with a relatively large number of taps. This is because the echo canceler is intended to cancel an echo component migrating from the transmitting side to the receiving side primarily as a result of impedance mismatching between a balancing network circuit and a given circuit; the echo canceler must deal with the uncertain factor of the impedance mismatching between the network circuit and any given communication line. Thus the adaptive filter is required to offer high processing capabilities per unit time. The result is a correspondingly increased level of power dissipation in the adaptive filter.

When active, the adaptive filter recognizes as an error signal the difference between the output thereof and the output of a target system, and gives responses equivalent to those of the target system so as to minimize that error signal. If the output of the target system is an echo of the input signal thereto, then the adaptive filter functions as an echo canceler.

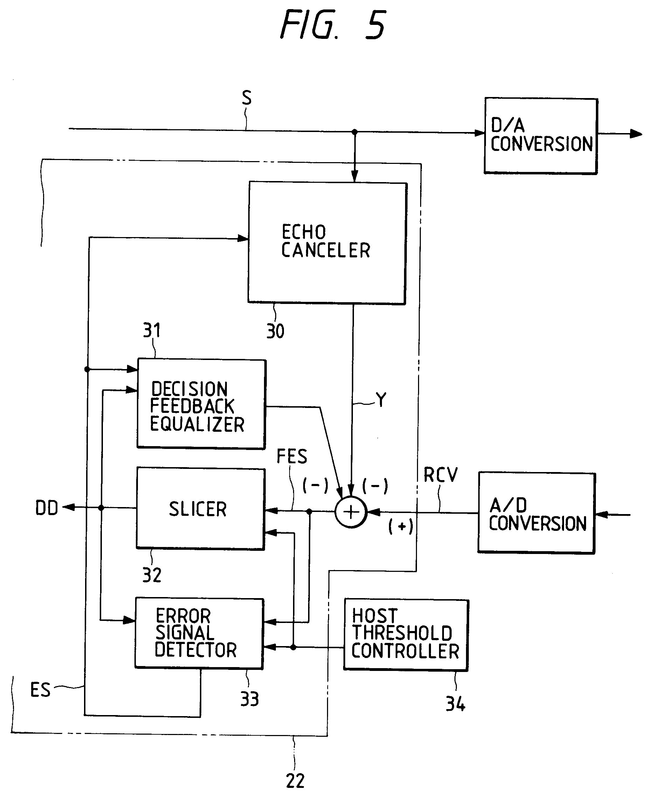

Fig. 7 describes a typical algorithm of a transversal type adaptive filter to which the invention is applied. In Fig. 7, reference character S is an input signal; Z's are delay elements for retaining the input signal S consecutively over the delay time corresponding to the sampling period of the input signal S; and C0 through Cn are tap coefficients. The adaptive filter repeats similar processing for each tap on a time series basis. Broadly grouped, there are two types of processing that the adaptive filter carries out: output calculation processing and tap coefficient update processing. The output calculation processing involves multiplying a given input signal S by its corresponding tap coefficient (MM) for each tap, the results of the multiplication being added up for all taps (TA) to obtain a filter output Y. The tap coefficient update processing involves updating the tap coefficient in accordance with an error signal ES. The error signal ES is generated by a slicer 32, an error signal detector 33 and a host threshold controller 34, which will be described later with reference to Fig. 5. More specifically, the tap coefficient update processing involves having the error signal ES multiplied (M) by the input signal S. Adding a tap update coefficient or a convergence coefficient (K) to the product of this multiplication gives an update amount of the tap coefficient. Then adding (A) the preceding tap coefficient to the update amount provides a new tap coefficient. Tap coefficients are stored in a data memory at their respective addresses. A tap coefficient read from the data memory is used in two operations: multiplication (MM) in the output calculation processing by the filter, and addition (A) in the tap coefficient update processing. The updated tap coefficient following the addition (A) is returned to the same address in the data memory from which the old coefficient was read out.

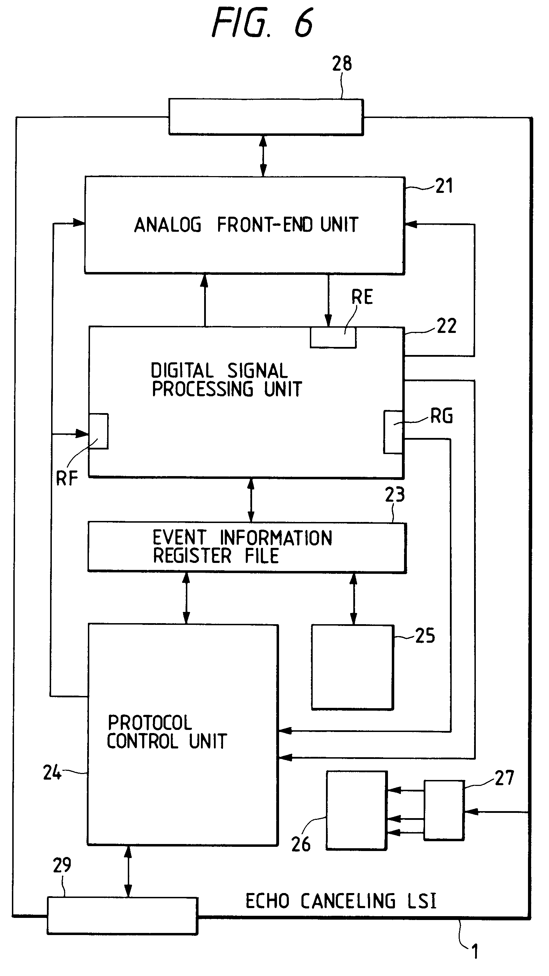

Fig. 6 is a block diagram of the above-described echo canceling LSI 1 in its chip image. The echo canceling LSI 1 comprises an analog front-end unit 21, a digital signal processing unit 22, an event information register file 23, a protocol control unit 24, a timer counter unit 25, a timing generator 26, an analog phase-locked loop circuit 27, a U-point interface circuit 28, and an S-point interface circuit 29. These units are formed illustratively by the conventional Bi-CMOS process on a single semiconductor substrate such as a silicon substrate.

The digital signal processing unit 22 includes a control block and an operation block. The control block executes microprograms in predetermined procedures by referring to the event information register file 23. In doing so, the control block causes the operation block to function illustratively as an adaptive filter implementing an echo canceler. The analog front-end unit 21 performs analog-to-digital conversion of transmitted signals and digital-to-analog conversion of received signals. The U-point interface circuit 28 is connected to the exchange 3 through a hybrid transformer or a balancing network circuit, not shown. The event information register file 23 is a register arrangement that retains the transition state generated by the digital signal processing unit 22 and by the protocol control unit 24. Upon detecting the transition state held in the event information register file 23, the units 22 and 23 determine their respective operations. The protocol control unit 24 carries out protocol processing including the frame processing and scrambling for data transmission and the synchronization for data reception. The timer counter unit 25 is used for state transition control. The timing generator 26 generates clock signals for various operations of the echo canceling LSI 1. The analog phase-locked loop circuit 27 multiplexes a signal clock signal fed from the outside and supplies the multiplexed signal to the timing generator 26. The S-point interface circuit 29 provides interface with the subscriber side.

Fig. 5 is a function block diagram of the echo canceling LSI 1 as it is used as an echo canceler. In Fig. 5, reference numeral 30 is an echo canceler, and 31 is a decision feedback equalizer for removing the inter-symbol interference of signals. Both the echo canceler 30 and the decision feedback equalizer 31 are implemented using an adaptive filter each. A slicer 32 slices an input signal illustratively into a four-value level format. The slider 32 outputs decision data DD comprising one code bit and two information bits. An error signal detector 33 generates an error signal ES. A host threshold controller 34 generates an inter-level voltage (slice voltage) Vref for the four-value level format. The error signal detector 33 generates the error signal ES based on the following equation:

$$ES = FES - DD \times Vref$$

where, FES stands for a far-end signal, to be described later. The digital signal processing unit 22 implements these functions in predetermined operation procedures.

The signal S such as transmitted data from the protocol control unit 24 is illustratively a three-bit signal but is not limited thereto. This signal is one of the four values, determined by the one code bit and two information bits. After undergoing digital-to-analog conversion, the signal S is fed to a balancing network circuit, not shown. The received analog signal that was input to the balancing network circuit is converted from analog to digital format before being forwarded to the digital signal processing unit 22. The echo canceling LSI 1 is capable of full-duplex operations involving transmission and reception being carried out in parallel. At this point, the balancing network circuit illustratively takes into consideration the impedance of the hybrid transformer connected to the communication line. This removes the voltage component of the transmitted analog signal from the voltage component supplied from the line 9 to the hybrid transformer. In this manner, no part of the signal transmitted following digital-to-analog conversion is allowed to echo back to the analog-to-digital conversion side by way of the hybrid transformer. It should be noted that the above echo-back prevention scheme is realized on the assumption that the impedance of the line 9 remains constant. In practice, the impedance somewhat varies from line to line, and the status of a given line also changes over time. Because it is totally unpredictable which line will be connected next, the echo canceler 30 is needed to eliminate unfailingly the echo component coming from the transmitting side to the receiving side.

Given a single signal S during one sampling cycle, the echo canceler 30 performs calculations on all taps by following illustratively the algorithm of Fig. 7. The result is a filter output Y. In like manner, the decision feedback equalizer 31 carries out adaptive filter computations. The filter output from the echo canceler 30 and from the decision feedback equalizer 41 is subtracted from a signal RCV (a received signal containing the echo component) that was converted from analog to digital format in this sampling cycle. This provides a far-end signal FES devoid partially or totally of the echo component of the transmitted signal or the inter-symbol interference component of the signal. The far-end signal FES is sliced by the slicer 32 into the four-value level format, whereupon the FES becomes the decision data DD. As indicated by the equation given above, the error signal detector 33 subtracts from the far-end signal FES the product of the decision data DD and the slice voltage Vref. The resulting error signal ES is supplied to the echo canceler 30 and decision feedback equalizer 31. In turn, the echo canceler 30 and the decision feedback equalizer 31 utilize the error signal ES for updating tap coefficients. In a training period, the signal S is treated as a training signal. At this time, the signal RCV is regarded practically as the echo component of the training signal. By acting repeatedly as the adaptive filter, the echo canceler 30 and the decision feedback equalizer 31 update tap coefficients so as to converge the error signal ES to zero. At the end of the training period, there is provided a far-end signal FES substantially devoid of the echo component. During exchanges following the training, the echo canceler 30 and decision feedback equalizer 31 cancel the echo by following up on the changes of status of the line used. At this time, the decision data DD is given as received data to the protocol control unit 24.

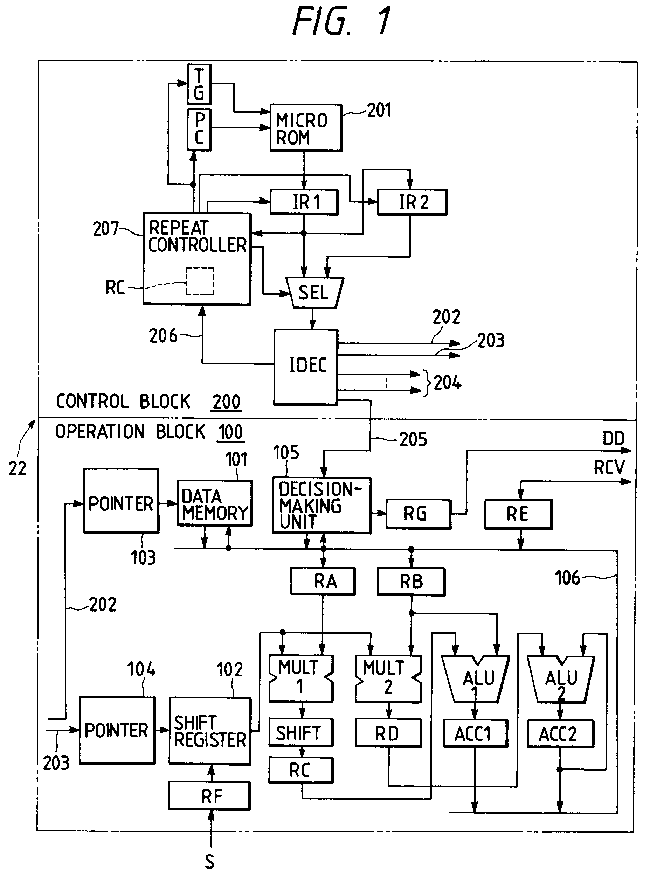

Fig. 1 is a detailed block diagram of the digital signal processing unit 22 for implementing the echo canceler 30 or decision feedback equalizer 31 using an adaptive filter. The unit 30 of Fig. 1 constitutes a data processor according to the invention, the unit including an operation block 100 and a control block 200.

The operation block 100 comprises, but is not limited to, two multipliers MULT1 and MULT2 and two arithmetic and logic units ALU1 and ALU2. The multiplier MULT1 receives and multiplies outputs from a register RA and a shift register 102, and sets the product of the multiplication to a register RC via a shifter SHIFT. The other multiplier MULT2 receives and multiplies outputs from a register RB and the shift register 102, and sets the product to a register RD. The arithmetic and logic unit ALU1 operates on outputs from the registers RC and RB and places the result into an accumulator ACC1. The arithmetic and logic unit ALU2 operates on outputs from the register RD and accumulator ACC2 and returns the result to the accumulator ACC2. In Fig. 1, reference numeral 106 represents a common bus.

In the operation block 100, reference numeral 101 is a data memory which acts as various work areas or which retains therein the tap coefficients C0 through Cn (Fig. 7) at their respective addresses. The data memory 101, connected to the common bus 106, is made illustratively of a static random access memory that is addressed with address signals generated consecutively by a pointer 103. The shift register 102 functions as a delay element Z as described with reference to Fig. 7. The signal S from the protocol control unit 24 or the like is fed to the shift register 102 through an input register RF. In accordance with the output from a pointer 104, the shift register 102 shifts and outputs the signal S or the like consecutively. A register RE acts as an input register that receives the signal RCV from the analog front-end unit 21. A register RG outputs the decision data DD. In Fig. 1, reference numeral 105 is a decision-making unit that takes on part or all of the functions of the slicer 32 and error signal detector 33 described with reference to Fig. 5.

The control block 200 contains a micro ROM 201 as a typical control memory. The ROM 201 retains such microprograms as a digital signal processing program for executing adaptive filtering (Fig. 7) aimed at echo cancellation. The address with which to access the micro ROM 201 is pointed to by a program counter PC. A timing generator TG generates the clock signal for activating the micro ROM 201. Instruction registers IR1 and IR2 contain microinstructions that are read from the micro ROM 201. This embodiment comprises these two instruction registers in view of the number of instructions to be executed repeatedly in series by a repeat instruction, to be described later. A selector SEL selects the output either from the instruction register IR1 or from the IR2, and supplies an instruction decoder IDEC therewith. In turn, the instruction decoder IDEC decodes the microinstruction it has received and generates various kinds of control information. The control information is fed to the relevant elements within the control block 200 as well as to the operation block 100. Reference numeral 202 is a group of control signals directed to the pointer 103; 203 is a group of control signals to the pointer 104; 204 is a group of control signals by which to select memory or register elements in the operation block 100 or by which to control the arithmetic and logic operations; 205 is a group of control signals to the decision-making unit 105; and 206 is a group of control signals to a repeat controller 207, to be described below.

The repeat controller 207 is a control means that causes the instruction registers IR1 and IR2 to retain their instructions depending on the occurrence of an internal state requiring particular instructions held in the micro ROM 201 to be executed repeatedly. In so doing, the repeat controller 207 controls the timing generator TG and program counter PC to inhibit access to the micro ROM 201 so that the target instructions for recurrent execution will be output repeatedly from the instruction registers IR1 and IR2. The micro ROM 201 contains a repeat instruction. The repeat instruction comprises: code information for generating an internal state requiring specific instructions to be executed repeatedly; information designating the instruction repeat count and the number of instructions to be repeatedly executed in series; and information constituting initial values of the pointers 103 and 104. The instruction decoder IDEC contains logic circuits that decode the repeat instruction in order to generate an internal state for causing particular instructions following the repeat instruction to be executed repeatedly. That internal state is brought to the repeat controller 207 by the instruction decoder IDEC using the control signal group 206. At the same time, the instruction decoder IDEC initializes the pointers 103 and 104 using the control signal groups 202 and 203. When informed with the control signal group 206 of the internal state requiring specific instructions to be executed repeatedly, the repeat controller 207 reads and recognizes the number of the instructions to be repeated in series from the instruction register IR1, and presets the instruction repeat count to a repeat counter RC within the controller 207. The repeat controller 207 allows the instructions to be read from the micro ROM 201 and executed as many times as the recognized instruction repeat count. Thereafter, the repeat controller 207 stops the timing generator TG and fixes the value on the program counter PC in order to inhibits access to the micro ROM 201. Until the value on the repeat counter RC returns to zero, the repeat controller 207 repeatedly supplies the instruction decoder IDEC with the instruction held in the instruction register IR1 or IR2 for recurrent execution of one or a plurality of instructions. For example, if one instruction is to be executed repeatedly, the instruction furnished after the repeat instruction is read from the micro ROM 201 and placed into the instruction register IR1 for execution. Then with access to the micro ROM 201 inhibited, the instruction held in the instruction register IR1 is given repeatedly to the instruction decoder IDEC for recurrent execution of the same instruction until the value on the repeat counter RC returns to zero. If two instructions are to be repeatedly executed in series, the instruction furnished immediately after the repeat instruction is read from the micro ROM 201 and placed into the instruction registers IR1 for execution. Then the instruction held in the instruction register IR1 is internally transferred to the instruction register IR2, and the next instruction is read from the micro ROM 201 and placed into the instruction register IR1 for execution. Thereafter, with access to the micro ROM 201 inhibited, the selector SEL is switched so that the instructions in the instruction registers IR1 and IR2 will be alternately fed to the instruction decoder IDEC for recurrent execution of the two instructions until the repeat counter RC returns to zero.

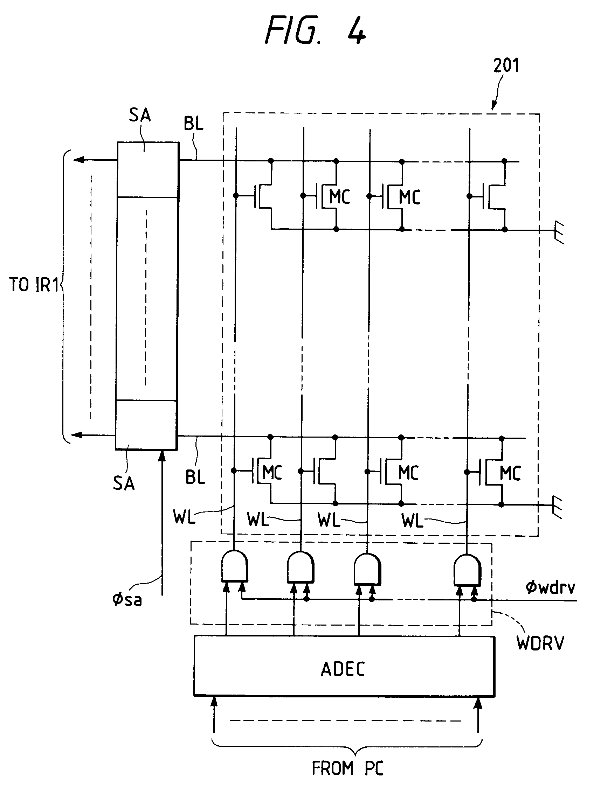

Fig. 4 shows an example of the micro ROM 201. The micro ROM 201 is illustratively a contact code type mask ROM but is not limited thereto. This mask ROM retains information that is determined by whether or not to connect a given memory cell MC in a matrix arrangement to a bit line BL. The selection terminal of each memory cell MC is connected to a word line WL of the same column in the matrix. An address signal coming from the program counter PC is decoded by an address decoder ADEC. As a result of this, a specific word line WL corresponding to the current address is driven by a word driver WDRV to a single line selection level. The memory cell whose selection terminal is connected to the driven word line is either connected or not connected to the bit line BL. This determines the level of each bit line BL. Each of the bit lines BL is connected to a sense amplifier SA. The sense amplifier SA detects and amplifies the bit line level, outputting the information in the memory cell MC to the instruction register IR1. A driving control signal ø wdrv is supplied to the word driver WDRV. Only when the signal ø wdrv is brought High, can the word line be driven to the selection level. Each sense amplifier SA has a power transistor, not shown, containing a control terminal that receives an activation control signal ø sa. Only when the signal ø sa is brought High, is the sense amplifier SA enabled. Both the driving control signal ø wdrv and the activation control signal ø sa are supplied by the timing generator TG. While access to the micro ROM 201 is being inhibited under control of the repeat controller 207, at least the driving control signal ø wdrv and the activation control signal ø sa are negated to the low level.

Suppose that the digital signal processing unit 22 of Fig. 1 carries out adaptive filtering in accordance with the algorithm of Fig. 7. In this case, the processing per tap is expressed as follows. That is, the processing is realized by executing instructions 1 and 2, but is not limited thereby:

(1) Instruction 1;
RB <- DRM(q)
RC <- F{-n, RA*RS(i)}
RD <- RB*RS(i)
(2) Instruction 2;
DRM(q) <- ACC1
ACC1 <- RC + RB
ACC2 <- ACC2 + RD

The operations above will now be described in more detail.

(1) RB <- DRM(q)

The tap coefficient held at address $q$ in the data memory 101 (DRM) is read out and transferred to the register RB.

(2) RC <- F{-n, RA*RS(i)}

The multiplier MULT1 multiplies the error signal ES held in the register RA, by the input signal S held in the i-th location of the shift register 102 (RS). (This corresponds to the multiplication (M) in Fig. 7.) The product of the multiplication is shifted right $n$ bits (i.e., toward low-order bit side) to yield a convergence coefficient. The product is further multiplied by 1/N, N being 2 to the n-th power (this corresponds to the addition of the convergence coefficient (K) in Fig. 7). The result is retained in the register RC. This value represents the update amount of the tap coefficient. The update amount of tap coefficient is supplemented by the convergence coefficient in order to reduce the time constant of a transfer function (i.e., to lower the responsiveness involved), whereby the responsive operation is stabilized.

(3) RD <- RB*RS(i)

The multiplier MULT2 multiplies the tap coefficient held in the register RB, by the input signal S held in the i-th location of the shift register 102. (This corresponds to the multiplication (M) in Fig. 7.) The product of the multiplication is transferred to the register RD.

(4) DRM(q) <- ACC1

The tap coefficient obtained by updating the immediately preceding tap and held in the accumulator ACC1 is plated at address $q$ in the data memory 101.

(5) ACC1 <- RC + RB

The update amount of the tap coefficient held in the register RC is added to the tap coefficient held in the register RB with respect to the current tap to be operated on (this corresponds to the addition (A) in Fig. 7). The sum of the addition is placed in the accumulator ACC1. The tap coefficient in the accumulator ACC1 will be written back to the data memory 101 in the next processing cycle.

(6) ACC2 <- ACC2 + RD

The arithmetic and logic unit ALU2 adds the value in the accumulator ACC2 to the product held in the register RD (this corresponds to the addition (TA) in Fig. 7). The sum of the addition is placed back to the accumulator ACC2. When the outputs of all taps are added up for a single sampling signal, the value retained in the accumulator ACC2 is regarded as the filter output.

Where the adaptive filter is operated using the instructions 1 and 2 above, the two instructions need to be executed as many times as the number of taps for that filter. When repeat processing is carried out by the digital signal processing unit 22 of Fig. 1, the applicable microinstructions may be described as follows:
Repeat instruction; RPT, i = 2, c = X, DP = Y, SP = Z

Instruction 1; OP1

Instruction 2; OP2

where, RPT is operation code information specific to the repeat instruction; $i$ is the number of instructions to be executed repeatedly; $c$ is the number of times the instructions are to be repeated (number of the instructions $i$ x repeat count [number of times the instructions as one group are repeated]); DP is the initial value of the pointer 103 for gaining access to the data memory 101; SP is the initial value of the pointer 104 for controlling the shift register 102; OP1 is operation code information or the like equivalent to the instruction 1; and OP2 is operation code information or the like equivalent to the instruction 2.

The micro ROM 201 is accessed using the value of the program counter PC as the address. This allows the repeat instruction to be read into the instruction register IR1. The operation code RPT of the repeat instruction is decoded by the instruction decoder IDEC. In turn, using the control signal group 206, the instruction decoder IDEC informs the repeat controller 207 of the occurrence of the internal state requiring particular instructions to be repeatedly executed following the repeat instruction. At the same time, using the control signal groups 202 and 203, the instruction decoder IDEC initializes the pointers 103 and 104 (DP = Y, SP = Z). When informed of the internal state in the manner described, the repeat controller 207 reads and recognizes the number of the instructions to be repeated (i = 2) from the instruction register IR1, and presets the instruction repeat count (c = X) to the repeat counter RC within the controller 207. (In this embodiment, as will be described later, the instruction repeat count X is given as follows: X = number of instructions $i$ x repeat count $P$ - number of instructions $i$. This is because the first instruction is executed in advance. For example, if a combination of instructions 1 and 2 is executed five times (= repeat count $p$), then the instruction repeat count X = 2 x 5 - 2 = 8. The repeat count $c$ may also be regarded as the operation cycle count minus the number of instructions.)

In the next operation cycle, the program counter PC is incremented by 1. The instruction 1 for adaptive filtering is read from the micro ROM 201 and placed into the instruction register IR1. The instruction 1 is decoded by the instruction decoder IDEC. The decoding yields control signals according to which the operation block 100 is activated. This allows the processing corresponding to the instruction 1 to be executed.

In the operation cycle that follows, the program counter PC is again incremented by 1. The instruction 2 for adaptive filtering is read from the micro ROM 201 and placed into the instruction register IR1. The instruction decoder IDEC decodes the instruction 2, generating control signals according to which the operation block is activated. This permits the processing corresponding to the instruction 2 to be executed. In this operation cycle, the repeat controller 207 transfers to the instruction register IR2 the instruction 1 that was held by the instruction register IR1 in the preceding cycle; the instruction register IR2 retains the instruction 1 it has received. After the repeat controller 207 recognizes that the instructions 1 and 2 have been placed respectively in the instruction registers IR1 and IR2 according to the information "i = 2," the controller 207 stops the timing generator TG. At the same time, the repeat controller 207 fixes the value on the program counter PC, thereby inhibiting further access to the micro ROM 201. At the end of the processing based on the instruction 2, the pointers 103 and 104 are incremented by 1 each by the control signals coming from the instruction decoder IDEC. (The pointers 103 and 104 may be regarded as an operand address generation circuit each and, when incremented by 1, may be considered to have generated a new operand address each.) With the instructions 1 and 2 executed, the operations on the first tap of the adaptive filter come to an end.

In the next operation cycle, the repeat controller 207 causes the selector SEL to select the output of the instruction register IR2 so that the instruction 1 in the register IR2 will be sent to the instruction decoder IDEC. This activates the operation block 100 and allows the operations corresponding to the instruction 1 to be carried out. In this operation cycle, the repeat counter RC is decremented by 1. In the operation cycle that follows, the repeat controller 207 causes the selector SEL to select the output of the instruction register IR1 so that the instruction 2 in the register IR1 will be fed to the instruction decoder IDEC. This activates the operation block 100 and allows the operations corresponding to the instruction 2 to be performed. Finally the pointers 103 and 104 are incremented by 1 each. In this operation cycle, the repeat counter RC is decremented by another 1.

Thereafter, under control of the repeat controller 207, the instructions 1 and 2 are alternately executed in the procedure described above, until the repeat counter RC reaches zero. The operations are carried out for all taps. During that time, the micro ROM 201 will not be accessed. That is, with the timing generator TG deactivated by the repeat controller 207, the driving control signal ø wdrv and the activation control signal ø sa are held negated to the low level. As a result, the word driver WDRV drives no word line WL having a relatively large capacitive load. The sense amplifier SA is deactivated, and virtually no current flows therethrough. Where the adaptive filter is required to perform operations on tens of taps for each sampling signal, no access is needed to the micro ROM 201 once the necessary instructions have been placed in the instruction registers IR1 and IR2 by recurrent execution of the repeat instruction. This translates into considerable savings in the power dissipation required for access to the micro ROM 201.

When the repeat counter RC returns to zero, the repeat controller 207 allows the timing generator TG and the program counter PC to start again. Then the next microinstruction is read from the micro ROM 201 and is enabled for execution. For example, the data held in the accumulator ACC2 is moved as a filter output to a work area in the data memory 101.

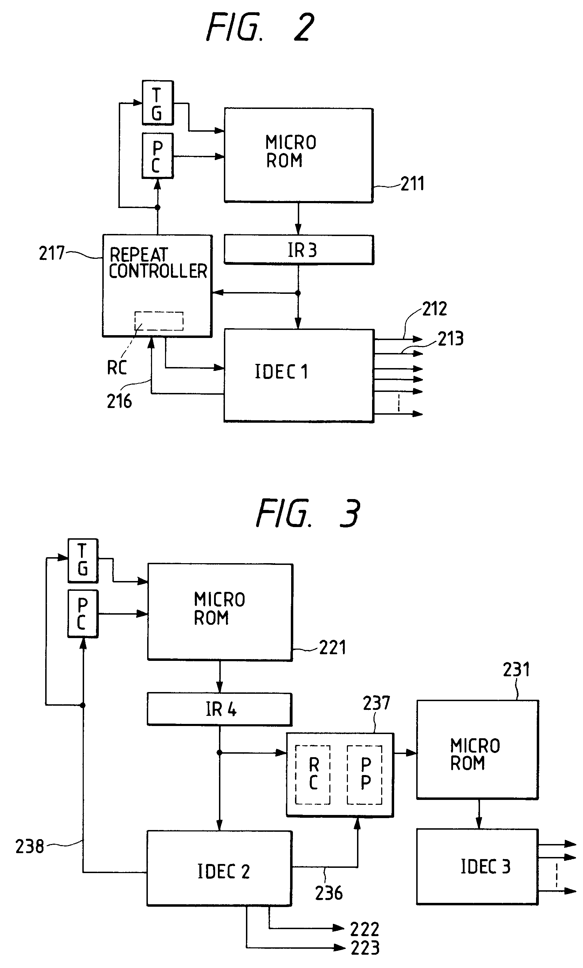

Fig. 2 depicts another control block used in the digital signal processing unit 22. This example applies to a case in which the contents to be repeatedly executed (e.g., contents of instructions 1 and 2) are furnished in different fields of a single instruction. In operation, such an instruction following the repeat instruction is read from a micro ROM 211 and placed into an instruction register IR3. An instruction decoder IDEC1 decodes the instruction in the instruction register IR3. The repeat instruction of this example is the same as that of the preceding example in one aspect: that they both contain an instruction repeat count and code information for generating an internal state requiring the instruction following the repeat instruction to be executed repeatedly. What makes the repeat instruction of this example differ from its preceding counterpart is that with the former, the instruction to be repeatedly executed comprises information placed in a number of fields and designating the operations to be performed. This information corresponds to the information of the preceding example about the number of instructions to be repeatedly executed in series. The repeat instruction of this example also includes information denoting initial values of the pointers 103 and 104.

The instruction decoder IDEC1 contains logic circuits that decode the repeat instruction to generate an internal state requiring the particular instruction following the repeat instruction to be executed repeatedly. The internal state thus generated is brought to a repeat controller 217 by a group of control signals 216. At the same time, the internal state causes the pointers 103 and 104 to be initialized through groups of control signals 212 and 213. When informed of the generation of the internal state in the manner described, the repeat controller 217 reads and recognizes the number of processing fields to be repeated in series from the instruction register IR3. At the same time, the repeat controller 217 presets the instruction repeat count to the repeat counter RC within the controller 217. Then the repeat controller 217 allows one instruction furnished following the repeat instruction to be read from the micro ROM 211 and executed. After this, the repeat controller 217 stops the timing generator TG and fixes the value on the program counter PC so as to inhibit further access to the micro ROM 211. Thereafter, the instruction fields held in the instruction register IR3 are decoded alternately to allow the processing described in these fields to be executed repeatedly, until the repeat counter RC returns to zero. In this example, too, the micro ROM 211 need not be accessed every time an instruction is repeated. This also translates into significant savings in the power dissipation involved.

Fig. 3 is a block diagram of further another control block used in the digital signal processing unit 22. This is an example in which the instructions to be executed repeatedly are stored in one ROM, and the other instructions are placed in another separate ROM. In Fig. 3, reference numeral 231 is a micro ROM containing the instructions to be executed repeatedly in adaptive filtering or similar processing. For example, the micro ROM 231 may retain the instructions 1 and 2 discussed in connection with Fig. 1. A microinstruction read from the micro ROM 231 is decoded by an instruction decoder IDEC3. The decoding yields control signals according to which relevant components of the processor are controlled. The remaining microinstructions are contained in a micro ROM 221. A microinstruction read from the micro ROM 221 is fed via an instruction register IR4 to an instruction decoder IDEC2 for decoding. The decoding by the instruction decoder IDEC2 also generates control signals according to which relevant components of the processor are controlled.

The micro ROM 221 contains a repeat instruction. The repeat instruction of this example comprises: code information for generating an internal state requiring a specific instruction to be executed repeatedly; the address in the micro ROM 231 at which resides the instruction to be repeatedly executed; information designating the instruction repeat count and the number of instructions to be repeated in series; and information denoting the initial values of the pointers 103 and 104. The instruction decoder IDEC2 has logic circuits that decode the repeat instruction to switch from the micro ROM 221 to the ROM 231 and to generate the internal state requiring a particular instruction in the ROM 231 to be executed repeatedly. The internal state thus generated is given to a repeat controller 237 by a group of control signals 236. At the same time, groups of control signals 222 and 223 are used to initialize the pointers 103 and 104. Furthermore, the timing generator TG is stopped and the value on the program counter PC is fixed using a group of control signals 238, whereby access to the micro ROM 221 is inhibited.

When informed of the generation of the internal state (in which a specific instruction in the micro ROM 231 is to be executed repeatedly) by use of the control signal group 236, the repeat controller 237 reads the address of the instruction for repetitive execution from the instruction register IR4 and places it into a pointer PP. At the same time, the repeat controller 237 reads and recognizes the number of instructions to be repeated in series from the instruction register IR, and presets the instruction repeat count to the repeat counter RC within the controller 237. Using the address in the pointer PP as the start address, the repeat controller 237 reads cyclically the instructions to be repeatedly executed in series, until the repeat counter RC returns to zero. In like manner, the operations are repeatedly carried out on all taps of the adaptive filter.

The microinstructions stored in the micro ROM 231 are far fewer than those in the micro ROM 221. Thus a correspondingly low driving capacity is required of the sense amplifier arrangement connected to the bit lines of the micro ROM 231. The fact that the smaller-capacity micro ROM 231 is accessed most of the time during filtering operations translates into far less power dissipation than if a micro ROM of a greater capacity is consecutively accessed during the comparable time period.

The above-described embodiments of the invention provide the following major advantages:

(1) Where particular instructions are executed repeatedly by the control block of Fig. 1 through the use of a repeat instruction, the relevant microinstructions are read from the micro ROM 201 and placed into the instruction registers IR1 and IR2. These instruction registers are then accessed in place of the micro ROM 201 for instruction retrieval and execution. This reduces the overall power dissipation required to activate the word lines and peripheral circuits associated with the micro ROM 201. In the control block of Fig. 2, a microinstruction is read from the micro ROM 211 and placed into the instruction register IR3. That instruction register is from then on accessed in place of the micro ROM 211 for instruction retrieval and execution. This, too, makes it possible to reduce the power dissipation required for access to the micro ROM 211 during recurrent execution of particular instructions by use of a repeat instruction. In the control block of Fig. 3, the micro ROM 231 is accessed for recurrent execution of specific instructions. In this case, the micro ROM 231 contains only the limited number of instructions to be executed repeatedly; the many other instructions are retained in the separate micro ROM 221. Because the micro ROM 231 is far smaller in capacity than the micro ROM 221, the power dissipation required for access to the former in repetitive operations is significantly reduced.

(2) Repetitive operations of one or a plurality of instructions are estimated to make up about 70 percent of the entire processing of the echo canceling LSI in the transversal filter or the like. The echo canceling LSI has the additional task to take on: how to deal with the uncertain factor of the impedance mismatching between the network and a given communication line connected thereto. This requires implementing an adaptive filter with a relatively large number of taps and having high processing performance per unit time. The capabilities required of the adaptive filter tend to result in the filter dissipating correspondingly high levels of power. By adopting any of the above-described control blocks, the adaptive filter or the like will drastically reduce power dissipation required for access to its micro ROM. Constructed in this manner, the apparatus incorporating the invention can adequately deal with the limited availability of distributed power from an exchange or from batteries.

(3) For repeated execution of instructions, a repeat instruction is used to initialize the pointer 103 for the data memory 101 and the pointer 104 for the shift register 102. Hence there is no need to execute data transfer instructions or the like for initialization. This makes the control procedure much simpler and requires less capacity of the micro ROM. The ROM of the reduced capacity dissipates less power when accessed.

(4) A plurality of instruction registers may be provided as described with reference to Fig. 1. This arrangement readily accommodates one or a plurality of instructions that need to be executed repeatedly.

Although the description above contains many specificities, these should not be construed as limiting the scope of the invention but as merely providing illustrations of some of the presently preferred embodiments of this invention.

For example, while the control memory was described above as the micro ROM, it may alternatively be a nanoprogram ROM, or a RAM in case evaluation LSI's are taken into account. The structure of the ROM is not limited to what is shown in Fig. 4; it may be modified as needed. The instruction register arrangement is not the only register arrangement in which to hold instructions to be repeatedly executed after retrieval from the control memory. Alternatively, special registers may be set aside for dedicated use in recurrent instruction execution. The number of registers is not limited to two; there may be one, three or more registers. In the above description, the number of instructions to be executed repeatedly and the instruction repeat count were shown to be variable, and these settings were set to the repeat controller by use of a repeat instruction. Alternatively, these settings may be fixed in advance. In that case, recurrent instruction execution is started by simply generating a suitable start signal without recourse to the repeat instruction. Sense amplifier deactivation and word driver disabling are not the only way to inhibit access to the control memory such as the micro ROM. Alternatively, the same effect is achieved by disabling the address decoder or by making other suitable modifications depending on the memory circuit format adopted. What is needed here is to reduce redundant power dissipation in any way appropriate. In the above description, the algorithm for adaptive filtering adopted linear convergence as an example in which the convergence coefficient for the updating of tap coefficients is given by a shifter. Alternatively, the level of sensitivity may be further lowered using sign convergence wherein a "1" is added to or subtracted from the least significant bit depending on the sign of the product from the multiplication of the error signal by the input signal. Another alternative is to switch selectively between the addition and subtraction of a "1" to and from the least significant bit.

For use as the instruction repeat count $c$, which is control information in the repeat instruction, a value of "number of instructions $i$ x repeat count" may be alternatively set. In this case, as opposed to what was described above, the repeat counter RC is decremented by 1 during the operation cycle in which is executed the first instruction that was read from the micro ROM and placed into the instruction register. Naturally, the repeat count RC has the value of "number of instructions x repeat count" (i.e., operation cycle count) set thereto in response to the repeat instruction. This makes it easier to establish control information in the repeat instruction, which permits easier programming for the user.

The above description has centered primarily on how to apply the invention to the echo canceling LSI for use with the ISDN (Integrated Services Digital Network), the background against which the inventors came up with the invention. However, the invention is not limited to this field; it also applies extensively to such diverse uses as dedicated LSI's for voice compression, voice synthesis and image emphasis, general-purpose digital signal processors, and microprocessors capable of repeatedly executing one or a plurality of instructions in series.

In other words, the invention applies at least to devices having instructions read from an on-chip control memory for recurrent execution.

In sum, the major benefits of the invention are as follows:

Where specific instructions are to be executed repeatedly, they are read from the control memory and placed in a register arrangement. The register arrangement is then accessed in place of the control memory for recurrent instruction execution. This reduces the power dissipation required for access to the control memory when one or a plurality of instructions are repeatedly executed in series.

Where a plurality of registers are provided to accommodate instructions read from the control memory, it is easy to handle either one instruction or a plurality of instructions for repeated execution.

A repeat instruction is used to generate an internal state requiring particular instructions to be executed repeatedly. When the repeat instruction initializes the instruction repeat count and the number of instructions to be repeatedly executed in series, the procedure for executing a series of instructions repeatedly is simplified.

Address generating means is provided to update the operand address needed for repetitive instruction execution, the updating being carried out when instruction execution is repeated. The address generating means is initialized by the repeat instruction. This simplifies the control procedure thanks to the absence of data transfer instructions or the like used for initialization. With the control memory capacity reduced correspondingly, the power dissipation required for access to the control memory is lowered.

The data processor according to the present invention may be applied to a digital signal processor or an echo canceling LSI that may constitute an adaptive filter. This type of filter has a relatively large number of taps and is required to offer high processing performance per unit time, thus consuming a correspondingly high level of power. In such applications, the inventive data processor dissipates much less power than before during access to the control memory for adaptive filtering or the like. Thus the apparatus incorporating the invention adequately deals with the limited availability of distributed power from an exchange or from batteries.

In another aspect of the invention, the small number of instructions to be executed repeatedly are stored in a separate control memory apart from the other instructions that are retained in another memory. Upon occurrence of the internal state requiring recurrent execution of any instructions in the separate control memory, that memory is selectively accessed for retrieval of the relevant instructions therefrom. Because the control memory accessed for repetitive instruction execution is far lower in capacity than the other memory containing the other instructions, the power dissipation required for access to the former memory is significantly reduced.

## Claims

1. A data processor formed on one semiconductor substrate, comprising:

    control memory means (201, 211, 221, 231) for retaining a plurality of instructions;

    access means (PC,TG) for accessing said control memory means (201, 211, 221, 231) to retrieve instructions therefrom in an appropriate order;

    retaining means (IR1...IR4) for retaining at least one instruction upon occurrence of an internal state requiring at least one instruction to be executed repeatedly;

    execution means (100) for executing an operation according to a furnished instruction; and

    control means (207, 217, 237, 238) for inhibiting the access by said access means (PC, TG) to said control memory means (201, 211, 221, 231) upon occurrence of said internal state, said control means further supplying said execution means (100) an appropriate number of times with the instruction retained in said retaining means (IR1...IR4).

2. A data processor according to claim 1, wherein said retaining means has at least one register (IR1...IR4) for receiving an instruction read from said control memory means (201, 211, 221, 231) and feeding said instruction to said execution means (100).

3. A data processor according to claim 2, wherein said control memory means (201, 211, 221, 231) has a particular instruction containing information designating the occurrence of said internal state, and information denoting said appropriate number of times; and

    wherein said control means (207, 217, 237, 238) has a counter (RC) to which said appropriate number of times is set in response to said particular instruction, said counter counting the number of times said at least one instruction is executed.

4. A data processor formed on one semiconductor substrate comprising:

    a memory (101, 102);

    a pointer (103, 104) for pointing to an address in said memory (101, 102);

    operation means for subjecting to an appropriate operation the data located at an appropriate address in said memory;

    control memory means (201, 211, 221, 231) for retaining a plurality of instructions;

    access means (PC TG) for accessing said control memory means (201, 211, 221, 231) to retrieve instructions therefrom in an appropriate order;

    retaining means (IR1...IR4) for retaining at least one appropriate instruction upon occurrence of an internal state requiring at least one instruction to be executed repeatedly, said one appropriate instruction designating an appropriate operation to be performed on the data located at said appropriate address in said memory (101, 102);

    decoding means (1DEC, 1DEC1...1DEC3) for decoding an instruction in order to generate a control signal (202...206, 212...216, 222, 223) for controlling said operation means (100) in accordance with the decoded instruction; and

    control means (207, 217, 237, 238) for inhibiting the access by said access means (PC TG) to said control memory means (201, 211, 221, 231) upon occurrence of said internal state, said control means further supplying said decoding means (1DEC, 1DEC1...1DEC3) with said appropriate instruction held in said retaining means (IR1...IR4) instead of in said control memory means (201, 211, 221, 231) whereby the value of said pointer (103, 104) is changed.

5. A data processor according to claim 4, wherein said retaining means has at least one register (IR1...IR4) for receiving an instruction read from said control memory means (201, 211, 221) and feeding said instruction to said decoding means (1DEC, 1DEC1...1DEC3).

6. A data processor according to claim 5, wherein said control memory means (201, 211, 221, 231) has a repeat instruction containing information designating the occurrence of said internal state, and information denoting said appropriate number of times said at least one instruction is executed; and

    wherein said control means (207, 217, 237, 238) comprises a counter (RC) to which said appropriate number of times is set in response to said repeat instruction and means (202, 203, 212, 213, 222, 223) for changing the value of said pointer (103, 104) every time said at least one instruction is executed.

7. A data processor according to claim 6, wherein said repeat instruction comprises information constituting a value to be set to said pointer (103, 104), said control means further containing means (202, 203, 212, 213, 222, 223) for setting said value to said pointer (103, 104) in response to said repeat instruction.

8. A data processor according to claim 5, wherein said control memory means (201) has a repeat instruction containing information designating the generation of said internal state, and information constituting a value to be set to said pointer (103, 104);

said control means comprising means (202, 203, 212, 213, 222, 223) for setting said value to said pointer (103, 104) in response to said repeat instruction, and means (202, 203, 212, 213, 222, 223) for changing the value of said pointer (103, 104) every time said appropriate instruction is executed.

9. A data processor with a control memory (201, 211, 221, 231) containing instructions to be read in an appropriate order for execution, said data processor being formed in a one-chip format and comprising:

register means (IR1...IR4) for retaining at least one appropriate instruction retrieved from said control memory (201, 211, 221, 231) upon generation of an internal state requiring said at least one appropriate instruction to be executed repeatedly; and

control means (207, 217, 237, 238) for inhibiting access to said control memory (201, 211, 221, 231) and for causing said at least one appropriate instruction to be output from said register means (IR1...IR4) for recurrent execution.

10. A data processor according to claim 9, wherein said register means is instruction register means (IR1, IR2) for retaining at least one instruction read from said control memory;

said register means comprising as many instruction registers (IR1, IR2) as needed to accommodate in parallel at least one instruction and more often a plurality of instructions to be executed repeatedly;

said control means (207) comprising means for allowing said plurality of instructions to be held in different instruction registers (IR1, IR2) for repetitive execution in an appropriate order.

11. A data processor according to claim 9, wherein said control memory (201, 211) contains a repeat instruction, for generating an internal state requiring at least one instruction to be executed repeatedly;

said data processor further comprising instruction decoding means (1DEC, 1DEC1) for decoding said repeat instruction in order to set to said control means (207, 217) the number of times said at least one instruction is executed and the number of instructions to be repeatedly executed;

said control means (207, 217) further comprising means for retrieving from said control memory (201, 211) as many instructions as the instruction execution count set to said control means (207, 217) and for placing the retrieved instructions into said register means (IR1...IR3) said means (207, 217) inhibiting concurrently the access to said control memory (201, 211), said means (207, 217) further causing the instructions in said register means (IR1...IR3) to be output to said instruction decoding means (1DEC, 1DEC1) as many times as required.

12. A data processor according to claim 11, further comprising address generating means (103, 104) for updating the operand address of at least one instruction to be executed repeatedly every time said at least one instruction is executed;

wherein said instruction decoding means (1DEC, 1DEC1) has means (202, 203, 212, 213) for decoding said repeat instruction in order to set an initial value to said address generating means (103, 104).

13. A data processor with a control memory (221, 231) containing instructions to be read in an appropriate order for execution, said data processor being formed in a one-chip format;

wherein said control memeory includes a first control memory (231) and a second control memory (221), said first control memory (231) retaining the instructions to be executed repeatedly, said second control memory (221) holding the instructions other than said instructions to be executed repeatedly;

said data processor further comprising control means (1DEC2, 236, 237, 238) for switching from said second control memory (221) to said first control memory (231) as the target of access for instruction retrieval therefrom, said switching being performed upon generation of an internal state requiring at least one instruction in said first control memory (231) to be executed repeatedly, said internal state being generated in accordance with an instruction read from said second control memory (221).

14. A data processor according to any of claims 1 to 13, wherein said control memory (201, 211, 221, 231) contains a program for implementing an adaptive filter through digital signal pro-

cessing.

# FIG. 1

## FIG. 2

## FIG. 3

# FIG. 4

# FIG. 5

# FIG. 6

ANALOG FRONT-END UNIT 21

DIGITAL SIGNAL PROCESSING UNIT 22

RE

RG

RF

EVENT INFORMATION REGISTER FILE 23

PROTOCOL CONTROL UNIT 24

25

26

27

28

29

ECHO CANCELING LSI 1

## FIG. 7

## FIG. 8